# EUROPÄISCHE PATENTSCHRIFT

(11) **EP 2 807 018 B1**
(45) Veröffentlichungstag und Bekanntmachung des Hinweises auf die Patenterteilung: **24.10.2018**
(21) Anmeldenummer: 13700031.1
(22) Anmeldetag: 07.01.2013
(51) Int. Cl.: B29C 73/16, B29L 30/00

(54) **RÜCKFLUSSSICHERUNG**
BACKFLOW PROTECTOR
DISPOSITIF ANTI-REFLUX

(30) Priorität: 26.01.2012 DE 102012100636
(43) Veröffentlichungstag der Anmeldung: 03.12.2014
(73) Patentinhaber: Continental Reifen Deutschland GmbH, 30165 Hannover (DE)
(72) Erfinder: DETERING, Rainer, 30926 Garbsen (DE); GERLACH, Markus, 31073 Grünenplan (DE); ERNST, Gerhard, 30629 Hannover (DE)
(74) Vertreter: Kilsch, Armin Ralph
(86) Internationale Anmeldenummer: PCT/EP2013/050131
(87) Internationale Veröffentlichungsnummer: WO 2013/110486

(56) Entgegenhaltungen:
- DE-B3-102008 015 022
- US-A1- 2011 290 372

## Beschreibung

Die Erfindung betrifft ein Pannenhilfesystem zum Abdichten und Aufpumpen von Kraftfahrzeugreifen, wobei das Pannenhilfesystem eine Druckgasquelle, vorzugsweise einen Kompressor umfasst, sowie einen Behälter für ein in den Kraftfahrzeugreifen einfüllbares selbsttätiges Dichtmittel. Der Behälter weist eine an seinem oberen Ende befindlichen Behälteröffnung auf, sowie eine mit dem Behälter verbundene Verteilereinheit für Dichtmittel und Druckgas. Die Verteilereinheit ist als Deckel für die Behälteröffnung ausgebildet und ist sowohl mit einer an die Druckgasquelle anschließbaren Einlassleitung als auch mit einer an den Kraftfahrzeugreifen anschließbaren Auslassleitung (4) versehen. Die Einlassleitung weist ein Einlassventil mit einem Einlassventilkörper auf.

Bei Reifenpannen besteht in aller Regel das Problem, dass - wie beispielsweise bei einem PKW bisher üblich - ein gefüllter und auf einer Felge montierter Reservereifen mitgeführt werden muss, der dann anstelle des Rades mit dem defekten Reifen montiert wird, wonach der defekte Reifen in dem für den Reservereifen vorgesehenen Stauraum im Fahrzeug befestigt werden und später einer Reparatur zugeführt werden muss. Hierzu ist es nicht nur oft notwendig, ein beladenes Fahrzeug auszuräumen, um an den entsprechenden Stauraum zu gelangen, sondern es muss auch das Fahrzeug selbst mit Wagenhebern aufgebockt und eine umständliche Reparaturarbeit durchgeführt werden.

Bei Fahrzeugen, die nicht mit schlauchlosen Reifen versehen sind, wie etwa bei Fahrrädern, ist es bei einer Reifenpanne nötigt, mit umfangreichem Werkzeug nach der Montage des Reifens den Mantel von der Felge zu entfernen, den Schlauch zu entnehmen und mit entsprechend mitgeführtem Reparaturmaterial zu flicken. Danach muss der Reifen bzw. der Schlauch oft mehrfach aufgepumpt werden, um eine einigermaßen sichere Weiterfahrt zu gewährleisten. Neben der schwierigen Reparaturtätigkeit besteht bei dem bisher bekannten Verfahren der Nachteil, dass die notwendigen Reparaturmaterialien, wie etwa eine entsprechende Pumpe sowie Hebe- und Schraubwerkzeuge, sowie bei nächtlichen Pannen nötige Beleuchtungskörper, in oder bei den entsprechenden Fahrzeugen nur unvollständig oder gar nicht vorhanden oder an den unterschiedlichsten Stellen verstaut sind und lange gesucht werden müssen.

Um diese Nachteile zu vermeiden, sind bereits Reparatursätze bekannt, die einen Kompressor, ein im Reifen koagulierendes Dichtmittel, meistens ein Latexmilch-Gemisch, die entsprechenden Verbindungsschläuche und die notwendigen Kabelanschlüsse zur Energiezufuhr sowie Schalter, Manometer und Bedienelement beinhalten und somit einen ständig einsetzbaren und vollständigen Reparatursatz bereitstellen, mit dem auf das Mitführen eines auf eine Felge aufgezogenen Reserverades oder auf die ständige Kontrolle anderer Reparaturmaterialien wie Schläuche, verschiedene Werkzeugschlüssel, Wagenheber etc. verzichtet werden kann.

Die Bedienung solcher Reparatursätze ist aber auch nicht ganz einfach. So müssen je nach Betriebszustand zunächst Dichtmittelbehälter und diverse Schlauchverbindungen angeschlossen oder umgebaut werden. Die meisten Reparatursätze sind nämlich auch gut dazu geeignet, ohne Dichtmitteleinsatz lediglich zum Aufblasen von Reifen, Schlauchbooten, Luftmatratzen, etc. eingesetzt zu werden. Aufgrund der heutzutage nur noch selten auftretenden Reifenpannen werden die Reparatursätze in der Regel häufiger für solche Freizeitzwecke gebraucht als für Notfälle. Wenn dies dann aber doch geschieht, befindet sich der Nutzer in ungewohnter und ungeübter Situation.

Ein Problem bei der Nutzung in Reparaturfällen entsteht zum Beispiel, wenn der Dichtmittelbehälter fälschlicherweise mit seinem Schlauch bzw. dem zugehörigen Anschlussstück zuerst mit dem Reifenventil verbunden wird und noch ein Restdruck im Reifen vorherrscht. Der in den Behälter einströmende Restdruck kann dazu führen, dass Dichtmittel aus dem Behälter in die Umgebung austritt, sofern Sicherungskappen auf der Einlassseite der Verteilereinheit bereits gelöst oder gar nicht vorhanden sind, oder dazu, dass Dichtmittel in Richtung eines bereits mit der Verteilereinheit verbundenen, aber noch nicht eingeschalteten Kompressors befördert wird und dort Ventile verklebt.

Zur Erleichterung der Handhabung der Geräte/Reparatursätze in solchen unterschiedlichen Anwendungen sind im Stand der Technik bereits Lösungen bekannt, die im Wesentlichen ein vereinfachtes Umschalten von der einen auf die andere Betriebsart beinhalten. So offenbart die DE 101 06 468 A1 eine Vorrichtung zum Ausbringen von Reifendichtmittel aus einem Behälter, wobei dem Behälter ein Entnahmeelement mit einem Ventil zugeordnet ist, welches zum Ausbringen von Reifendichtmittel dient. Das Ventil ist dabei als Ein- oder Mehrwegeventil ausgebildet und weist einen schaltbaren Bypass auf, beispielsweise zu betätigen durch einen Drehschalter, so dass in einer Schaltstellung eine Druckgasquelle direkt mit dem Reifen oder dem aufzublasenden Gegenstand verbunden werden kann. In einer anderen Schaltstellung ist eine Verbindung zwischen Druckgasquelle (Einlass), Dichtmittelbehälter und aufzublasenden Gegenstand (Auslass) möglich. Es kann also eine Umschaltung zwischen den Betriebszuständen "nur Aufpumpen" und "Pumpen mit Dichtmittel" vorgenommen werden, ohne Schlauchverbindungen zu wechseln oder Umbauten an dem Gerät vorzunehmen. Nachteiligerweise können auch hier die oben geschilderte Möglichkeit einer versehentlich falschen Anschlussreihenfolge der einzelnen Geräteteile und die damit ungewünschten Effekte durch Restdruck im Reifen nicht sicher verhindert werden.

DE 10 2008 015 022 B3 offenbart eine Vorrichtung gemäß dem Oberbegriff des Anspruchs 1.

Ausgehend von diesem Stand der Technik bestand für die Erfindung die Aufgabe, eine Vorrichtung zum Abdichten und Aufpumpen aufblasbarer Gegenstände bereitzustellen, die eine sichere Verbindung zwischen Dichtmittelbehälter bzw. Ventil- und Verteilereinheit bereitstellt, die eine vereinfachte Anwendung in der einen oder anderen Betriebsart erlaubt, die bei fehlerhafter Anschlussreihenfolge im Reifen vorhandenen Restdruck problemlos toleriert und somit sicher zu handhaben ist und die insbesondere eine möglichst einfache Konstruktion bei gleichzeitig robuster Ausführung aufweist und dazu einfach und preisgünstig herzustellen ist.

Gelöst wird diese Aufgabe durch die Merkmale des Hauptanspruchs. Weitere vorteilhafte Ausbildungen sind in den Unteransprüchen offenbart.

Dabei weist die Auslassleitung an ihrem reifenseitigen Ende ein Auslassventil auf, welches durch Anschluss an ein Reifenventil, ein so genanntes Schraderventil, geöffnet wird, wobei eine über das Auslassventil erfolgende, also reifenseitige, d.h. durch Restdruck im Reifen erfolgende Erhöhung des Innendrucks im Behälter den Einlassventilkörper schließend auf seinen Dichtsitz presst. Dadurch wird der Behälter kompressorseitig sicher und "selbstverstärkend" geschlossen, so dass mit der erfindungsgemäßen Ausbildung ein ungewollter Austritt von Dichtmittel ebenso sicher vermieden wird wie das Einpressen von Dichtmittel in empfindliche Kompressorbereiche.

Dabei wird eine Rückflußsicherung in Richtung Kompressor und dort angeordneter Leitungs- und Ventilbauteile dadurch realisiert, dass ein Ventilkörper, z.B. ein verschiebarer O-Ring, im Falle eines Druckaufbaus in der Dichtmittelflasche, hervorgerufen durch eine Druckquelle auf der Auslaßseite (z.B. Reifen mit Restdruck), den Einlaßkanal / die Einlaßöffnung der Dichtmittelflasche verschließt.

Bei Beaufschlagung mit Druckgas aus der Druckquelle, d.h. sobald der Druck durch die Druckquelle größer wird als der Druck innerhalb der Dichtmittelflasche, öffnet das somit als "Rückflußsicherungsventil" aufgebaute Einlassventil den Einlaßkanal / die Einlaßöffnung wieder und das Pannenhilfesystem kann, wie vorgesehen, benutzt werden.

Bei ordnungsgemäßem Gebrauch, bei dem die Druckbeaufschlagung der Dichtmittelflasche nur von der Einlaßseite erfolgt, hat das "Rückflußsicherungsventil" quasi keine Funktion. Im Lieferzustand ist der Einlaßkanal in diesem Falle nicht vom "Rückflußsicherungsventil" verschlossen. Der Verschluß der Flasche wird durch die Verschlußkappe / Schraubdeckel gewährleistet.

Eine vorteilhafte Ausführung besteht darin, dass das Einlassventil eine geschlossene Ausgangsstellung aufweist und das Einlassventil bei Beaufschlagung mit Druckgas aus der Druckquelle die Einlassleitung (3) zum Behälterinnenraum öffnet. Eine solche Ausbildung ist als Alternative zu der grundsätzlich "geöffneten" Anordnung des Einlassventils dann geeignet, wenn man z.B. aus Kostengründen nur ein Ventil auf der Einlassseite vorsehen und einen möglichst einfach konstruierten Schraubdeckel vorsehen will.

Eine weitere vorteilhafte Ausführung besteht darin, dass der Einlassventilkörper bei Beaufschlagung mit Druckgas aus der Einlassleitung bleibend verschiebbar ist, insbesondere darin, dass die Einlassleitung in einen mit der Behälteröffnung kommunizierenden Einlassstutzen führt, welcher als Ringraum-Leitung ausgebildet ist, wobei der Einlassventilkörper aus einer in die Ringraum-Leitung eingesetzte O-Ring-Dichtung besteht.

Durch eine solche Ausbildung ergeben sich eine überaus kompakte Bauweise und eine sehr einfache Herstellung aus Normbauteilen und mit nur wenigen einfachen Fertigungsschritten wie Bohren oder Fräsen oder Spritzgießen. Das Öffnen des Einlassventils und des Auslassventils erfolgt dabei automatisch und sicher.

Die weiteren vorteilhaften Ausbildungen lassen sich am besten anhand der nachfolgend beschriebenen Ausführungsbeispiele erläutern. Es zeigen
- Fig. 1: ein erfindungsgemäßes Pannenhilfesystems mit der zugehörige Verteilereinheit und den Einlass- und Auslassventilen im Schnitt
- Fig. 1a: eine vergrößerte Darstellung des noch nicht an das Reifenventil angeschlossenen Auslassventils der Fig. 1
- Fig. 1b: eine vergrößerte Darstellung der Verteilereinheit der Fig. 1 mit in Schließstellung befindlichem Einlassventilkörper, ausgebildet als O-Ring-Dichtung
- Fig. 2: das erfindungsgemäße Pannenhilfesystem gem. Fig. 1, bereits angeschlossen an das Reifenventil
- Fig. 2a: eine vergrößerte Darstellung des an das Reifenventil angeschlossenen Auslassventils der Fig. 2
- Fig. 3: das erfindungsgemäße Pannenhilfesystem gem. Fig. 1 und 2, bereits angeschlossen an das Reifenventil und an eine Druckquelle/Kompressor
- Fig. 3a: eine vergrößerte Darstellung der Verteilereinheit der Fig. 3 mit bleibend verschobenem Einlassventilkörper, ausgebildet als O-Ring-Dichtung

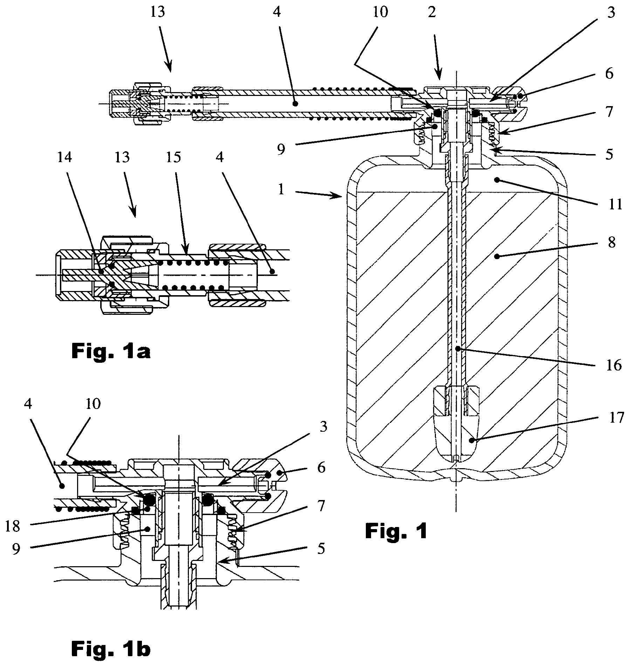

Die Fig. 1 zeigt einen Behälter 1 eines erfindungsgemäßen Pannenhilfesystems mit der zugehörigen Verteilereinheit und den Einlass- und Auslassventilen im Schnitt, wobei das Pannenhilfesystem eine hier nicht näher dargestellte Druckgasquelle aufweist, die an die Verteilereinheit 2 über eine Einlassleitung 3 angeschlossen ist. Die Verteilereinheit 2 weist eine an den ebenfalls hier nicht näher dargestellten Kraftfahrzeugreifen anschließbare Auslassleitung 4 auf.

Die Verteilereinheit ist dabei als Deckel oder Verschluss für die Behälteröffnung 5 ausgebildet. Die Fig. 1 zeigt auch einen Schraubdeckel 6 auf der Einlassleitung 3, der vor Anschluss des Behälters an eine Druckgasquelle entfernt werden muss.

Die Verteilereinheit 2 ist über ein Schraubgewinde 7 mit dem flaschenförmigen Dichtmittelbehälter 1 verbunden. Im Dichtmittelbehälter befindet sich ein in den aufblasbaren Gegenstand einfüllbares selbsttätiges Dichtmittel 8.

Die Auslassleitung 4 des Behälters 1 führt zum Kraftfahrzeugreifen und besteht aus einem flexiblen und luftdichten Schlauch aus Gummi. Natürlich können hier auch Kunststoffe und/oder Gewebematerialien als Schlauchmaterial eingesetzt werden.

Die Einlassleitung weist ein Einlassventil mit einem Einlassventilkörper 10 auf und ist so gestaltet, dass die Einlassleitung 3 in einen mit der Behälteröffnung kommunizierenden Einlassstutzen führt, welcher als Ringraum-Leitung 9 ausgebildet ist, wobei der Einlassventilkörper aus einer in die Ringraum-Leitung 9 eingesetzte O-Ring-Dichtung 10 besteht. Der als O-Ring-Dichtung 10 ausgebildete Einlassventilkörper öffnet bei Beaufschlagung mit Druckgas aus der Druckquelle die Einlassleitung 3 zum Behälterinnenraum 11. Im Detail zeigt dies auch noch einmal die Fig. 1b.

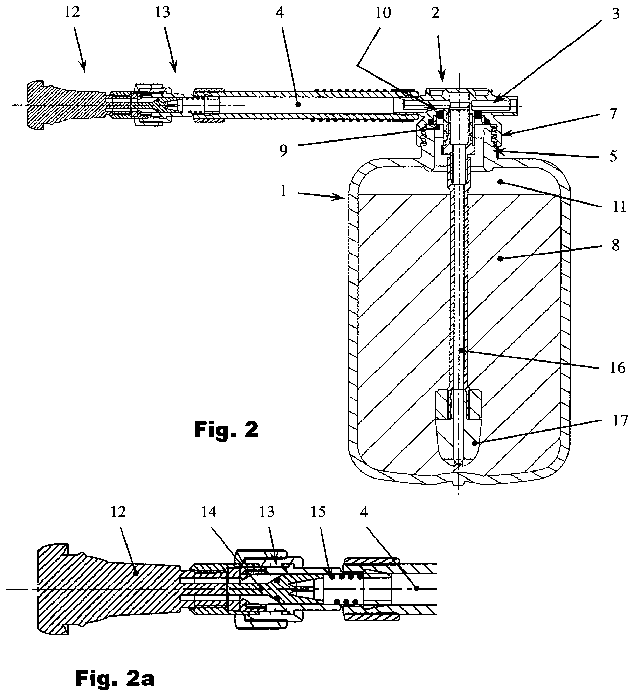

Die Auslassleitung 4 weist an ihrem reifenseitigen Ende ein durch Anschluss an ein Reifenventil 12 , siehe Fig. 2 und 2a, öffnendes Auslassventil 13 auf, wie es vergrößert in der Fig. 1a und 2a dargestellt ist. Das Reifenventil 12 ist hier ein so genanntes Schraderventil.

Das bekannte in Kraftfahrzeugen eingesetzte Schraderventil ist so aufgebaut, dass beim Aufstecken des eines Pumpenkopfes, eines Manometers oder eben auch des hier gezeigten Auslassventils 13 des Pannenhilfesystems im Schraderventil ein Stift heruntergedrückt wird, der letzteres ebenso öffnet wie auch das entsprechend konstruiertes Auslassventil 13 eines Pannenhilfesystems. Das Auslassventil 13 weist hierzu einen in genannter Weise mit dem Stift des Schraderventils zusammenwirkenden und mit einem stiftartigen Vorsprung versehenen Ventilkörper 14 auf, der gegen eine Feder 15 in die Öffnungsstellung gedrückt werden kann. Diese Öffnungsstellung des Ventilkörpers 14 zeigt die Fig. 2a.

Da der Behälter 1 ist in dieser Ausführung im Betriebszustand aufrecht angeordnet ist, steht die Auslassleitung 4 mit einem in den Behälterinnenraum 11 hineinragenden und bis unter den Dichtmittelspiegel reichenden Steigrohr 16 in Verbindung, wobei letzteres durch ein Gewicht 17 in seiner Position gehalten wird..

Das Einlassventil bzw. die O-Ring-Dichtung 10 weist eine geschlossene Ausgangsstellung auf, bei der eine über das geöffnete Auslassventil 13 evtl. erfolgende Erhöhung des Innendrucks im Behälter durch einen noch im Reifen vorhandenen Restdruck den Einlassventilkörper bzw. die O-Ring-Dichtung 10 schließend auf seinen Dichtsitz presst und somit den Behälter 1 kompressorseitig fest und selbstverstärkend schließt. Diese Stellung des Einlassventilkörpers 10 ist in der Fig. 1, 1b und 2 gezeigt.

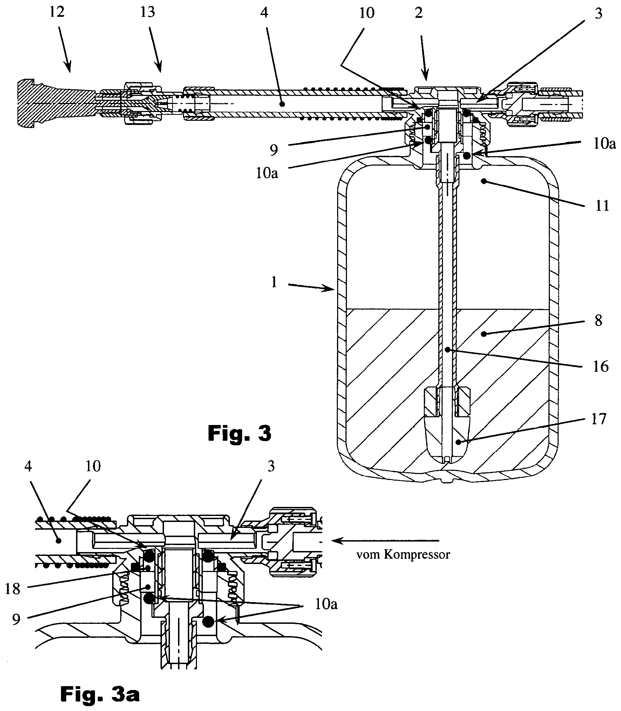

Der Einlassventilkörper bzw. die O-Ring-Dichtung 10 wird bei Beaufschlagung mit Druckgas aus der Einlassleitung 3 bleibend verschoben, wie dies in Fig. 3 und Fig. 3a durch die Position 10a dargestellt ist. Zur Verdeutlichung ist hier ebenfalls auch noch die O-Ring-Dichtung 10 in ihrer ursprünglich geschlossenen Position dargestellt, so dass die "Verschiebebewegung" klar wird.

Die Einlassleitung 3 geht in einen zentrisch zur Behälteröffnung angeordneten und innerhalb letzterer angeordneten Einlassstutzen 18 über. Der Einlassstutzen bzw. in seiner Fortsetzung die Behälteröffnung umgeben ringförmig die in das Steigrohr 16 reichende bzw. übergehende behälterseitige Teillänge der Auslassleitung 4.

Fig. 2 zeigt ebenfalls das Pannenhilfesystem, wie es in der Fig. 1 dargestellt ist, jedoch ist hier bereits der Schraubdeckel 6 auf der Einlassleitung 3 entfernt und das Auslassventil 13 ist bereits auf das Reifenventil 12 aufgeschraubt, wodurch das Auslassventil geöffnet wird. Die Öffnungsstellung des Ventilkörpers 14 zeigt die Fig. 2a noch einmal vergrößert.

Auch die Fig. 3 zeigt dasselbe Pannenhilfesystem, jedoch ist hier bereits die Kompressorleitung 19 an die Einlassleitung 3 angeschlossen, die O-Ring-Dichtung 10 ist durch Beaufschlagung mit Druckgas bleibend verschoben und ein Teil des Dichtmittels 8 ist bereits durch das unter den Dichtmittelspiegel reichenden Steigrohr 16, die Verteilereinheit 2, die Auslassleitung 4 und die Ventile 13 und 12 in den Reifen ausgetrieben.

### Bezugszeichenliste (Teil der Beschreibung)

- 1: Behälter
- 2: Verteilereinheit
- 3: Einlassleitung
- 4: Auslassleitung
- 5: Behälteröffnung
- 6: Schraubdeckel
- 7: Schraubgewinde
- 8: Dichtmittel
- 9: Ringraum-Leitung
- 10: Einlassventilkörper / O-Ring-Dichtung
- 11: Behälterinnenraum
- 12: Reifenventil
- 13: Auslassventil
- 14: Ventilkörper des Auslassventils
- 15: Feder
- 16: Steigrohr
- 17: Gewicht am Ende des Steigrohres
- 18: Einlassstutzen
- 19: Kompressorleitung

## Patentansprüche

1. Pannenhilfesystem zum Abdichten und Aufpumpen von Kraftfahrzeugreifen, wobei das Pannenhilfesystem folgende Einrichtungen umfasst:
- eine Druckgasquelle, vorzugsweise einen Kompressor,
- einen Behälter (1) für ein in den Kraftfahrzeugreifen einfüllbares selbsttätiges Dichtmittel (8), wobei der Behälter (1) eine an seinem oberen Ende befindlichen Behälteröffnung (5) aufweist,
- eine mit dem Behälter (1) verbundene Verteilereinheit (2) für Dichtmittel und Druckgas, wobei die Verteilereinheit (2) als Deckel für die Behälteröffnung (5) ausgebildet und mit einer an die Druckgasquelle anschließbaren Einlassleitung (3) und einer an den Kraftfahrzeugreifen anschließbaren Auslassleitung (4) versehen ist,
- und wobei die Einlassleitung (3) ein Einlassventil mit einem Einlassventilkörper (10) aufweist, wobei die Auslassleitung (4) an ihrem reifenseitigen Ende ein durch Anschluss an ein Reifenventil (12) öffnendes Auslassventil (13) aufweist, - wobei das Einlassventil den Einlaßkanal öffnet, sobald der Druck durch die Druckquelle größer wird als der Druck innerhalb des Behälters bzw. der Dichtmittelflasche,
**dadurch gekennzeichnet, dass** das Einlassventil bei einer über das Auslassventil (13) erfolgenden Erhöhung des Innendrucks im Behälter kompressorseitig den Behälter dadurch schließt, dass der Einlassventilkörper (10) schließend auf seinen Dichtsitz gepresst wird.

2. Pannenhilfesystem nach Anspruch 1, bei dem das Einlassventil eine geöffnete Ausgangsstellung aufweist und das Einlassventil nach Verschluss bei Beaufschlagung mit Druckgas aus der Druckquelle die Einlassleitung (3) zum Behälterinnenraum wieder öffnet.

3. Pannenhilfesystem nach Anspruch 1, bei dem das Einlassventil eine geschlossene Ausgangsstellung aufweist und das Einlassventil bei Beaufschlagung mit Druckgas aus der Druckquelle die Einlassleitung (3) zum Behälterinnenraum öffnet.

4. Pannenhilfesystem nach einem der Ansprüche 1 bis 3, bei dem der Einlassventilkörper (10) bei Beaufschlagung mit Druckgas aus der Einlassleitung (3) bleibend verschiebbar ist.

5. Pannenhilfesystem nach einem der Ansprüche 1 bis 4, bei dem die Einlassleitung (3) in einen mit der Behälteröffnung kommunizierenden Einlassstutzen führt, welcher als Ringraum-Leitung (9) ausgebildet ist und der Einlassventilkörper (10) aus einer in die Ringraum-Leitung eingesetzte O-Ring-Dichtung besteht.

6. Pannenhilfesystem nach einem der Ansprüche 1 bis 5, bei dem der Behälter (1) aufrecht angeordnet und die Auslassleitung (4) mit einem in den Behälterinnenraum (11) hineinragenden und bis unter den Dichtmittelspiegel reichenden Steigrohr (16) verbunden ist.

7. Pannenhilfesystem nach einem der Ansprüche 1 bis 6, bei dem die Einlassleitung (3) in einen zentrisch zur Behälteröffnung angeordneten und mit letzterer kommunizierenden Einlassstutzen (18) führt, wobei der Einlassstutzen eine Teillänge der Auslassleitung (4) ringförmig umgibt.

8. Pannenhilfesystem nach Anspruch 7, bei dem der Einlassstutzen (18) innerhalb der Verteilereinheit (2) und/oder innerhalb der Behälteröffnung ausgebildet ist.

## Claims

1. Breakdown assistance system for sealing and inflating motor vehicle tyres, wherein the breakdown assistance system comprises the following means:
- a pressurized gas source, preferably a compressor,
- a container (1) for a self-acting sealant (8) which can be introduced into the motor vehicle tyre, wherein the container (1) has a container opening (5) situated at its upper end,
- a distributor unit (2), which is connected to the container (1), for sealant and pressurized gas, wherein the distributor unit (2) is designed as a cover for the container opening (5) and is equipped with an inlet line (3), which is connectable to the pressurized gas source, and with an outlet line (4), which is connectable to the motor vehicle tyre,
- and wherein the inlet line (3) has an inlet valve with an inlet valve body (10), wherein the outlet line (4) has, at its tyre-side end, an outlet valve (13) which opens as a result of connection to a tyre valve (12),
- wherein the inlet valve opens the inlet channel as soon as the pressure effected by the pressure source is higher than the pressure within the container or the sealant bottle,
**characterized in that**, in the event of an increase, taking place via the outlet valve (13), of the internal pressure in the container, the inlet valve closes the container at the compressor side by virtue of the inlet valve body (10) being pressed with a closing action onto its sealing seat.

2. Breakdown assistance system according to Claim 1, in which the inlet valve has an open initial position and the inlet valve, after closure, opens the inlet line (3) to the container interior again when charged with pressurized gas from the pressure source.

3. Breakdown assistance system according to Claim 1, in which the inlet valve has a closed initial position and the inlet valve opens the inlet line (3) to the container interior when charged with pressurized gas from the pressure source.

4. Breakdown assistance system according to one of Claims 1 to 3, in which the inlet valve body (10) can be displaced permanently out of the inlet line (3) when acted on with pressurized gas.

5. Breakdown assistance system according to one of Claims 1 to 4, in which the inlet line (3) leads into an inlet connector which communicates with the container opening and which is formed as a ring-shaped chamber line (9), and the inlet valve body (10) is composed of an O-ring seal inserted into the ring-shaped chamber line.

6. Breakdown assistance system according to one of Claims 1 to 5, in which the container (1) is arranged upright, and the outlet line (4) is connected to a riser pipe (16) which projects into the container interior (11) and which extends as far as below the sealant surface.

7. Breakdown assistance system according to one of Claims 1 to 6, in which the inlet line (3) leads into an inlet connector (18) which is arranged centrally with respect to the container opening and which communicates with the latter, wherein the inlet connector surrounds, in ring-shaped fashion, a partial length of the outlet line (4).

8. Breakdown assistance system according to Claim 7, in which the inlet connector (18) is formed within the distributor unit (2) and/or within the container opening.

## Revendications

1. Système d'assistance routière pour étanchéifier et gonfler des pneus de véhicule automobile, le système d'assistance routière comprenant les dispositifs suivants :
- une source de gaz sous pression, de préférence un compresseur,
- un récipient (1) pour un agent d'étanchéité (8) automatique pouvant être introduit dans le pneu de véhicule automobile, le récipient (1) présentant une ouverture de récipient (5) située au niveau de son extrémité supérieure,
- une unité de distribution (2) connectée au récipient (1) pour l'agent d'étanchéité et le gaz sous pression, l'unité de distribution (2) étant réalisée sous forme de couvercle pour l'ouverture de récipient (5) et étant pourvue d'une conduite d'entrée (3) pouvant être raccordée à la source de gaz sous pression et d'une conduite de sortie (4) pouvant être raccordée au pneu de véhicule automobile,
- et la conduite d'entrée (3) présentant une soupape d'entrée avec un corps de soupape d'entrée (10),
- la conduite de sortie (4) présentant, au niveau de son extrémité du côté du pneu, une soupape de sortie (13) s'ouvrant lors de son raccordement à une valve de pneu (12),
- la soupape d'entrée ouvrant le canal d'entrée dès que la pression à travers la source de pression est supérieure à la pression à l'intérieur du récipient ou de la bouteille d'agent d'étanchéité,
**caractérisé en ce que** la soupape d'entrée, lors d'une augmentation de la pression interne dans le récipient se produisant par le biais de la soupape de sortie (13), ferme le récipient du côté du compresseur en pressant le corps de soupape d'entrée (10) contre son siège d'étanchéité pour le fermer.

2. Système d'assistance routière selon la revendication 1, dans lequel la soupape d'entrée présente une position de sortie ouverte et la soupape d'entrée, après la fermeture lors de la sollicitation avec du gaz sous pression provenant de la source de pression, ouvre à nouveau la conduite d'entrée (3) vers l'espace interne du récipient.

3. Système d'assistance routière selon la revendication 1, dans lequel la soupape d'entrée présente une position de sortie fermée et la soupape d'entrée, lors de la sollicitation avec du gaz sous pression provenant de la source de pression, ouvre la conduite d'entrée (3) vers l'espace interne du récipient.

4. Système d'assistance routière selon l'une quelconque des revendications 1 à 3, dans lequel le corps de soupape d'entrée (10) lors de la sollicitation avec du gaz sous pression provenant de la conduite d'entrée (3) peut être déplacé de manière permanente.

5. Système d'assistance routière selon l'une quelconque des revendications 1 à 4, dans lequel la conduite d'entrée (3) conduit dans une tubulure d'entrée communiquant avec l'ouverture du récipient, laquelle tubulure est réalisée sous forme de conduite d'espace annulaire (9) et le corps de soupape d'entrée (10) se compose d'un joint torique inséré dans la conduite d'espace annulaire.

6. Système d'assistance routière selon l'une quelconque des revendications 1 à 5, dans lequel le récipient (1) est disposé debout et la conduite de sortie (4) est connectée à un tube montant (16) pénétrant dans l'espace interne du récipient (11) et s'étendant jusqu'en dessous du niveau de l'agent d'étanchéité.

7. Système d'assistance routière selon l'une quelconque des revendications 1 à 6, dans lequel la conduite d'entrée (3) conduit dans une tubulure d'entrée (18) disposée centralement par rapport à l'ouverture du récipient et communiquant avec cette dernière, la tubulure d'entrée entourant sous forme annulaire une longueur partielle de la conduite de sortie (4).

8. Système d'assistance routière selon la revendication 7, dans lequel la tubulure d'entrée (18) est réalisée à l'intérieur de l'unité de distribution (2) et/ou à l'intérieur de l'ouverture du récipient.
